# EUROPEAN PATENT SPECIFICATION

(11) **EP 0 334 662 B1**
(45) Date of publication and mention of the grant of the patent: **29.09.1993**
(21) Application number: 89302938.9
(22) Date of filing: 23.03.1989
(51) Int. Cl.: H02K 1/18, H02K 23/04

(54) **Magnet-retaining structure for an electric motor**
Magnethalteanordnung für einen elektrischen Motor
Structure de maintien des aimants pour un moteur électrique

(30) Priority: 25.03.1988 JP 38372/88
(43) Date of publication of application: 27.09.1989
(73) Proprietor: CALSONIC CORPORATION, Tokyo (JP)
(72) Inventor: Hata, Toyohiko Calsonic Corporation, Nakano-ku Tokyo (JP); Aoki, Etsuo Calsonic Corporation, Nakano-ku Tokyo (JP)
(74) Representative: Rees, David Christopher

(56) References cited:
- DE-A- 3 311 710
- DE-U- 7 125 029
- GB-A- 1 463 778
- US-A- 4 638 203

## Description

This invention relates to an electric motor comprising: a motor casing having an open end which is substantially covered by an end plate; a rotor shaft rotatably mounted, at one end, in the plate and, at the other end, in the other end of the casing; a commutator and an armature mounted on the rotor shaft; brush gear arranged to bear on the commutator; and two magnetic elements of laterally arcuate section mounted in the casing adjacent the inner surface thereof, each element having an axial end face remote from the opening which abuts an axial stop formed on the casing; and a removable projection constituting a mounting for the brush gear and an electrical coupler, the elements being braced against the inner surface of the casing by means of a generally U-shaped resilient retaining member having a base portion and a pair of legs extending from the base portion, the legs bearing against opposed first circumferential end faces of the elements, a second circumferential end face of each of the elements being urged toward respective circumferential stops on the inner surface of the casing, the ends of the legs of the retaining member remote from the base portion facing generally towards the open end of the casing.

D.C. motors are used for driving the blower of an air conditioner in an automobile, for example. D.C. Motors of this kind are provided with an internal magnet serving to form a magnetic field. They come in two types. One type has the magnet attached fast with adhesive agent to the inner wall surface of the motor casing. The other type has the magnet fastened to the inner wall surface of the casing by virtue of the resilient force of a resilient retainer for an example of this see Japanese Laid-Open Utility Model Application no. SHO 60(1985)-93,465).

The D.C. motors of the former type which have the magnet attached by an adhesive agent to the inner wall surface of the casing thereof have the disadvantage that the adhesive may degrade with age. In this case the magnet will separate from the inner wall surface of the casing. These motors, during the course of assembly, require heat treatment for drying the adhesive agent and consequently entail a further disadvantage in that the heat treatment jeopardises the operational efficiency of the assembly process.

The motors of the latter type which have the magnet fastened to the inner wall surface of the casing by virtue of the resilient force of a resilient retainer are efficiently assembled without requiring anything equivalent to the heat treatment. Thus, they have been finding increased popularity in recent years.

The resilient retainer mentioned above is made by bending a round bar in the shape of the letter U. This is inserted between the opposed end faces of the magnet. The resilient force of the resilient retainer acts on the magnet in such a manner as to press the magnet radially outwardly with the result that the magnet is fastened to the inner wall surface of the casing.

When the resilient retainer is merely inserted between the opposed end faces of the magnet, however, there arises the possibility that the resilient retainer will slip off in one axial direction. Since the force of the resilient retainer acts outwardly and towards the ends of the U-shape, it tends to move in the direction of the end (the directions of the open edges of the U shape). The aforementioned "slip" ensues when this force builds up and exceeds the frictional force between the resilient retainer and the end faces of the magnet.

There is the problem that this "slip" tends to occur more readily with an increasing force of the resilient retainer, i.e. the propensity of the resilient retainer to slip grows in relation to the increased outward pressure on the magnet in the radial direction. This propensity will eventually hinder the fastness with which the magnet is attached to the inner wall surface of the casing.

The motor disclosed in the utility model publication mentioned above is not furnished with any means for preventing the magnet from moving toward the counter-power side. Thus, it entails a further disadvantage in that the magnet will be compelled by the condition of the motor's installation, or the vibration exerted on the motor, to move in the axial direction.

A first object or this invention is to provide a magnet-retaining structure for a motor which will experience limited or no slip.
For the purpose of preventing the resilient retainer from the slip and the magnet from the displacement, there must be adopted such a measure as provides the casing with a projection capable of establishing a fast union between the magnet and the resilient retainer after the magnet has been attached to the housing with the resilient retainer. This measure has a disadvantage that the process of manufacture of the motor suffers from appreciably increased complexity.

GB-A-1463778 discloses a small electric motor construction in which the mounting arrangement for the brush gear has a pair of projecting limbs which define opposed channels. The channels are arranged to accept a bracing spring. The spring serves to brace the permanent magnets against the inner wall of the casing.

The inventors have found how to solve the drawbacks inherent in the conventional techniques as mentioned above. They have consequently developed a magnet-retaining structure for a motor, which comprises a cylindrical casing, two magnets inserted in the cylindrical casing, and a resilient retainer adapted to fasten the semicircular magnets to the inner wall surface of the casing with the resilient force thereof and which, owing to the construction mentioned above, serves to simplify the manufacture of component parts of the motor and enhance the efficiency of the work of final assembly of the motor and, at the same time, prevents the resilient retainer from slip and the magnets from displacement in the axial direction.

A second object of this invention is to provide a magnet-retaining structure for a motor, which permits improvement in the sealability of the coupler after it is fixed in place.

A third object of this invention is to provide a magnet-retaining structure for a motor, which prevents the resilient retainer from dislocation in the direction of the centre of the casing.

A fourth object of this invention is to provide a magnet-retaining structure for a motor, which prevents the resilient retainer from sliping, the magnets from displacement in the axial direction and, at the same time allows omission of electric connections inside the motor.

A fifth object of this invention is to provide a magnet-retaining structure for a motor, which allows a commutator and a brush to be incorporated in the motor casing.

The present invention is characterised in that the removable projection is received in an aperture in the casing, which aperture is also partially defined by the adjacent surface of the end plate, the projection facing the said ends of the legs of the retaining member and abutting the magnetic elements in the axial direction.

A removable projection used to fasten two magnets inserted in a cylindrical casing and held by the resilient force of a resilient retainer to the inner wall surface of the casing, simplifies the manufacture of component parts to the motor, facilitates the work of final assembly of the motor, and prevents the resilient retainer from the slip and the magnets from the displacement in the axial direction.

Preferably, the casing has at least the coupler insertion hole formed in a flat surface.

In the construction described above, when the coupler is set in place, the fastness of mutual adhesion between the casing and the coupler is so high as to improve the sealability of the coupler relative to the casing.

Preferably, at least the end faces of the opposite end faces in the circumferential direction of each of the magnets which are on the side for admitting the insertion of the resilient retainer are formed as slanted so as to prevent the resilient retainer from being dislocated in the direction of the centre of the casing.

In this construction, the resilient retainer is cannot be dislocated in the direction of the casing even when the resilient force of the resilient retainer acts in such a manner as to press the two magnets outwardly in the radial direction.

Preferably, the coupler is provided on the upper end surface thereof with opposed leaf springs having respectively the brush attached thereto.

In this construction, since the electric connections leading to the brush can be produced during the manufacture of the coupler, the work of electric connection inside the motor can be omitted. Further, this construction prevents the resilient retainer from being slipped and the magnets from being displaced in the axial direction.

Preferably, the commutator is in the shape of a drum.

In this construction, the commutator can be easily positioned between the opposed brushes during the attachment of the coupler to the casing. Thus, the incorporation of the commutator and the brushes is easily achieved.

The present invention can be put into practice in several ways, two of which will now be described by way of example with reference to the accompanying drawings in which:
Figure 1 is a cross-section illustrating one embodiment of this invention;
Figure 2 is a front view of the embodiment in Figure 1;
Figure 3 is a cross-section taken through Figure 1 along the line III-III;
Figure 4 is a perspective view illustrating a part of the embodiment in an exploded state;
Figure 5 is a cross-section illustrating another embodiment of this invention; and
Figure 6 is a perspective view illustrating the coupler of Figure 5.

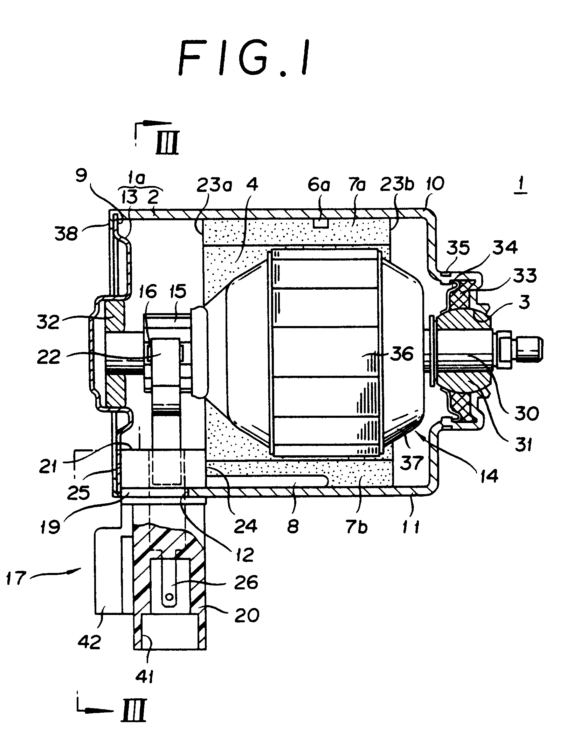

A motor 1, illustrated in Figure 1, is used for the purpose of driving the blower of an air conditioner in an automobile, for example. However, this use is by no means the only one to which this invention is applicable.

The motor 1 comprises a motor body 1a which is composed of a cylindrical blind casing 2 and an end bracket or cover 13 secured in an opening 9 of the casing 2. Similarly to the conventional motor, this motor 1 has magnets 4 attached to the inner wall surface of the casing 2. Inside the magnets 4, an armature 14 is fixed on a rotary shaft 30 opposite the magnets across a very small air gap.

The rotary shaft 30 is rotatably supported by an oil-impregnation bearing 31 retained by the casing 2 and an oil-impregnation bearing 32 located in a recess of the end bracket 13. The two oil-impregnation bearings 31, 32 are made of a porous metallic material such as an iron type sintered alloy and are impregnated with lubricant. A felt 33 is attached to the periphery of the oil-impregnation bearing 31. A releasable bearing-retaining spring 34, kept depressed in the casing 2 removably anchors the felt 33 and bearing 31 in position. This bearing-retaining spring 34 is held by engaging a plurality of projections 35 formed on the casing 2.

On the armature 14, a multiplicity of axially extending slots 36 are formed. An armature coil 37 is formed by having a conductive wire would around along these slots 36. When electric current is passed through the armature coil 37, the interaction between the electric current and the magnetic field formed by the magnets 4 generates a rotational force and sets the rotary shaft 30 into motion.

A commutator 15 in the shape of a cylindrical drum is fixed on one end of the rotary shaft 30 adjacent the armature 14. A pair of brushes 16 are held in sliding contact with the outer surface of this commutator 15. Thus, the electric current is supplied to the armature coil 37 via the brushes 16 and the commutator 15.

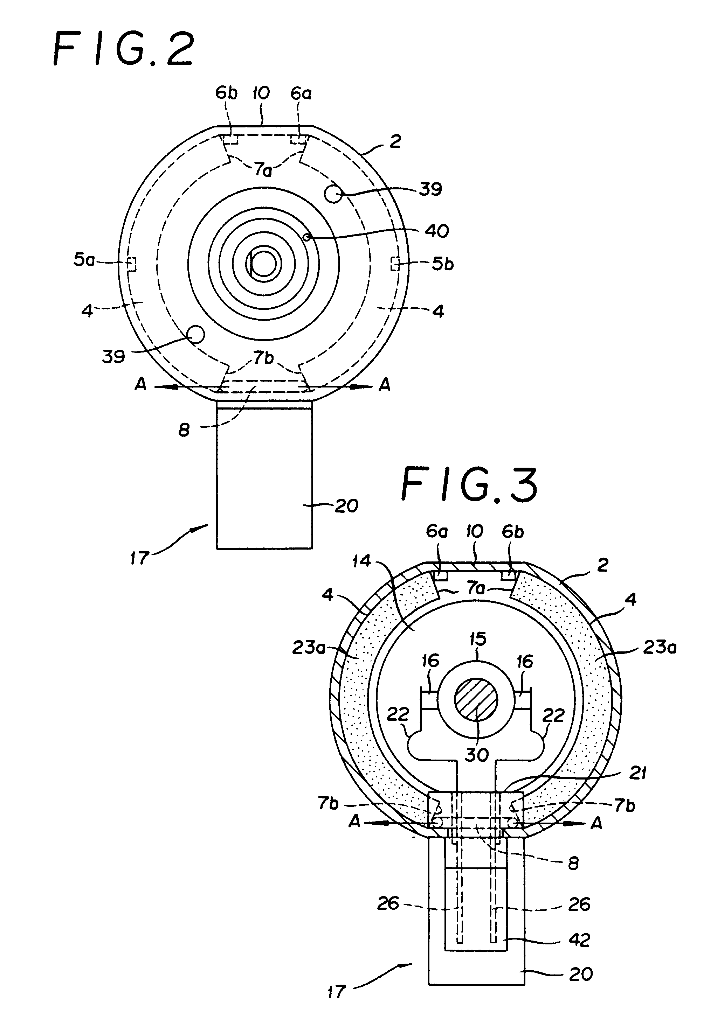

The casing 2 has flat faces 10, 11 formed respectively on the upper and lower parts thereof as illustrated in Figures 2 to 4.

In the power side end face of the casing 2, a centre hole 3 for the insertion of the rotary shaft 30 is formed. Further, in the power side end face, a hole 39 for allowing the motor body 1a to be helically fixed to another member (such as a fan case) and a respiratory vent 40, communicating with the motor interior, are formed.

In the opening 9 on the counter-power side of the casing 2, a radially inwardly extending securing flange 38 is formed to secure the end bracket 13 in place.

The two magnets 4 each have a part-circular (arcuate) cross-section shape. The outer peripheral surface of each magnet is matched to the shape of the inner wall surface of the arcuate part of the casing 2. The inner peripheral surface lies opposite the armature 14 across the air gap. The two circumferential end faces 7a, 7b of each of the magnets 4 are so formed as to be directed substantially to the central axis of the casing 2 when the magnets 4 are set in place inside the casing 2.

For the purpose of regulating the power side positions of each of the magnets 4 in the axial direction, first stops 5a, 5b are formed in the arcuate part of the casing 2. These first stops 5a, 5b are adapted so that the axial end faces 23b of the opposed end faces 23a, 23b of each of the magnets which are each on the side opposite the opening 9 will abut the first stops 5a, 5b.

Similarly for the purpose of regulating the positions of the magnets in the circumferential direction, second stops 6a, 6b are formed on one flat face 10 of the casing 2 in such a manner that the circumferential end faces 7a, 7b of the two opposed faces 7a, 7b of each of the magnets 4 will abut with the respective second stops 6a, 6b.

On the other flat face 11 of the casing 2, a coupler insertion aperture 12 for permitting the attachment of the coupler 17 is formed.

For the purpose of fixing the magnets 4 to the inner wall surface of the casing 2, a magnet-fixing member 8, intended as a resilient retainer, is inserted between the circumferential end faces 7a, 7b of each of the magnets 4.

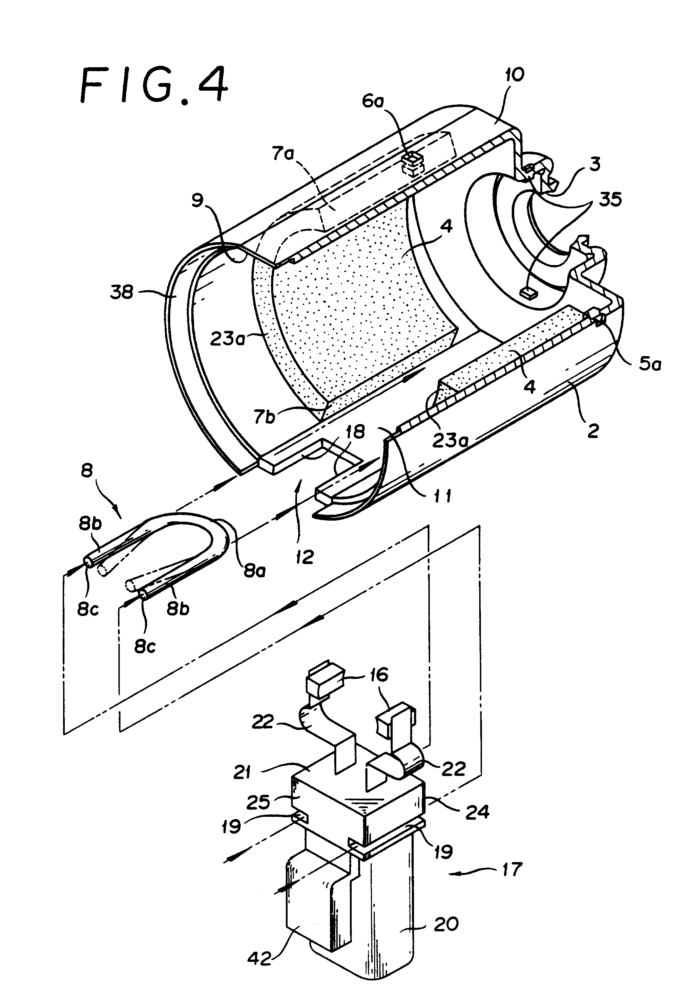

This magnet-fixing member 8 is formed of a resilient material bent in the shape of the letter U, as illustrated in Figure 4, so that its width at the leading end part 8a formed by the loop between legs 8b is substantially equal to the distance between the end faces 7b of the magnets and the width of the end parts 8c of the two legs 8b is slightly larger than the aforementioned distance between end faces 7b. The magnet-fixing member 8 is inserted in such a manner that the two leg parts 8b thereof assume their positions on the opening 9 side of the casing 2.

When the magnet-fixing member 8 is inserted as described above, the resilient force thereof will act upon the two magnets 4 which have their circumferential positions determined by the projections. By this resilient force, the two magnets 4 are pressed outwardly in the radial direction and fixed to the inner wall surface of the casing 2.

In the magnet-retaining structure of the present invention, a coupler 17, adapted to supply external electric current to the brushes 16, is attached to the casing 2 in such a manner as to be nipped between the end faces 23a of each of the magnets 4 in the axial direction and the inner wall surface of the end bracket 13. By this coupler 17, the magnets 4 are prevented from being displaced toward the counter-power side and the magnet-fixing member 8 is prevented from slipping off toward the counter-power side.

To be more specific, the coupler 17 has a coupler body 20 made of a resinous material. In the coupler body 20 is formed a receiving recess 41 to which a connector (not shown) connected to an outside power source is attached. A connector-fixing member 42 is formed in the coupler body 20. The member 42 is adapted to snap into engagement with a claw part (not shown) of the connector when the connector is set in place and then prevent the connector from being dislocated. Further, on the opposite lateral faces of the coupler body 20, guide grooves 19 are formed along the flat lateral faces 18 of the coupler insertion hole 12. The coupler 17 is so adapted as to be guided by the guide grooves 19 and attached to the coupler insertion hole 12 as slid therein from the opening 9 side.

On the upper end face 21 of the coupler body 20 are installed a pair of leaf springs 22. Each spring 22 is provided at a leading end thereof with a brush 16. Owing to the resilient force of the leaf springs 22, the brushes 16 are urged to abut suitably with the commutator 15. Inside the coupler body 20, the leaf springs 22 are electrically connected to terminals 26. When the connector is mounted on the coupler body 20, the electric current from the external power source is supplied to the commutator 15 via the terminals 26, the leaf springs 22, and the brushes 16.

While the motor 1 is in its assembled state, the front face 24 of the coupler 17 abuts the end faces 23a of the magnets 4 on the counter-power side and the rear surface 25 thereof abuts the inner wall surface of the end bracket 13. In this state, the ends 8c of the legs of the magnet-fixing member 8 need not be held in contact with the front face 24 of the coupler 17.

The operation of the magnet-retaining structure of this invention will now be described.

First, to assemble the motor 1, the oil-impregnation bearing 31, the felt 33, and the bearing-retaining spring 34 are attached to the casing 2 which has been formed by pressing.

In this case, the bearing-retaining spring 34 has only to be depressed past the projections 35 in order to be firmly caught by the projections 35. As a result, the oil-impregnation bearing 31 is easily positioned and fixed securely.

Then, the two magnets 4 are inserted into the casing 2 and disposed so as to abut the first and second stops 5a, 5b, 6a and 6b. Subsequently, the magnet-fixing member 8, with the two leg parts 8b kept urged toward each other, is inserted, leading end first, between the end faces 7a, 7b of the two magnets 4 in the circumferential direction. When the magnet-fixing member 8 is inserted to a stated position, the two leg parts 8a, 8b are released. As a result, the resilient force of the magnet-fixing member 8 is exerted in the direction A illustrated in Figure 2 and 3 and the magnets 4 are pressed outwardly in the radial direction and fixed to the inner wall surface of the casing 2.

The fixation of the magnets 4 inside the casing 2 can be attained exclusively by the resilient force of the magnet-fixing member 8. The heat treatment which is used to dry an adhesive agent is not required at all in the present invention. As a result, the efficiency of the work of assembling the motor is appreciably improved.

Then, the rotary shaft 30 to which the armature 4 and the commutator 15 have been fixed is inserted into the central hole 3.

After this, the opposite lateral flat faces 18 defining the coupler insertion hole 12 are fitted in the guide grooves 19 of the coupler 17 and the coupler 17 is slid in the coupler insertion hole 12. Then, by further driving the coupler 17 in, the front face 24 thereof is made to engage the end faces 23a of the two magnets 4.

In this case, since the commutator 15 is in the shape of a drum and the commutator 15 can be easily positioned between the opposed brushes 16, the mutual attachment of the commutator 15 and the brushes 16 can be attained easily. Further, since the electric connection from the terminals 26 to the brushes 16 has been already made during the manufacture of the coupler, electric connection (such as soldering) inside the motor during the assembly of the motor 1 can be omitted. Thus, the efficiency of the work of motor assembly is further markedly improved.

Then, the oil-impregnation bearing 32 is depressed into the recess of the end bracket 13 which has been formed by pressing. This end bracket 13 is attached to the opening 9 of the casing 2 and flange 38 of the casing 2 is folded over it. As a result, the opening 9 of the casing 2 is closed and the inner wall surface of the bracket 13 abuts the rear face 25 of the coupler 17.

Consequently, the coupler 17 is nipped between the end faces 23a of the magnets 4 and the inner wall surface of the end bracket 13. The two magnets 4, therefore, are fixed between the first stops 5a, 5b and the coupler 17 and prevented from being displaced in the axial direction.

In the meantime, the reaction of the resilient force urging the magnets 4 acts on the magnet-fixing member 8 inserted home as described above in such a manner as to give rise to a force tending to move the magnet-fixing member 8 toward the counter-power side. When this force builds up and surpasses the frictional force generated against the end faces 7b of the magnets, the displacement of the magnet-fixing member 8 in the direction of the opening 9 begins to occur. Even when this displacement is produced, the magnet-fixing member 8 is never allowed to slip toward the counter-power side from between the magnets 4 because the end faces 8c of the legs 8b of the magnet-fixing member 8 will abut with the front face 24 of the coupler 17. An addition to the resilient force of the magnet-fixing member 8, and a consequent increase in the pressure against the magnets 4, cause absolutely no impairment of the securement of the magnets 4. This is because the increased resilient force, though it produces the initial displacement, is prevented from inducing the dislocation by the coupler 17 which holds the member 8 in place.

Since the force which originates in the reaction of the resilient force of the magnet-fixing member 8 never tends to displace the fixing member 8 itself toward the power side, there is no need to employ any measure for preventing the magnet-fixing member 8 from being dislocated toward the power side.

Since the displacement of the two magnets 4 and the dislocation of the magnet-fixing member 8 are precluded as described above, the two magnets 4 are securely fixed to the inner wall surface of the casing 2.

Further, the magnet-fixing member 8 is never dislocated in the direction of the rotary shaft 30 because the opposite end faces 7b of the magnets 4 are formed so as to be directed substantially toward the central axis of the casing 2. Thus, the legs 8b of the member 8 are braced in the acute angle defined between the end faces 7b and the adjacent surface of the casing 2.

Moreover, the sealability of the coupler 17 during its attachment can be easily improved because the coupler insertion hole 12 of the casing 2 is formed in a flat face and is allowed to come into intimate contact with the flat face of the guide grooves 19 of the coupler 17. The opposite flat faces 10, 11 of the casing 2 facilitate the installation of the motor 1.

In this closed type motor the air trapped inside the motor 1 is expanded and contracted by the temperature difference when the motor 1 is in operation and when it is at rest. This is called a respiratory action of the air. To cope with this respiratory action, the motor 1 of the present invention is provided in the casing 2 with a respiratory vent 40. The interior of the motor 1 communicates with the ambient air through this respiratory vent 40. Without this, the contraction of the air cannot occur inside the motor 1 alone. The seepage of moisture in the motor 1 interior through the minute gap remaining in the seemed part of the end bracket 13 cannot occur. As a result, the respiratory vent 40 serves to preclude the occurrence of dew which tends to cause electric malfunctions without the need for a sealing agent around the secured part of the bracket 13.

Generally, for the purpose of protecting the casing 2 against corrosion, it is coated with a corrosion proofing paint before the motor is assembled. Since the motor of this invention requires no heat treatment as described above, it is not necessary to use a coating material which is resistant to heat as well as to corrosion. Even with a relatively inexpensive coating material, the coated casing 2 retains sufficient corrosion resistance. Thus, the motor of this invention has an economic advantage that it allows a saving in the cost of the coating used.

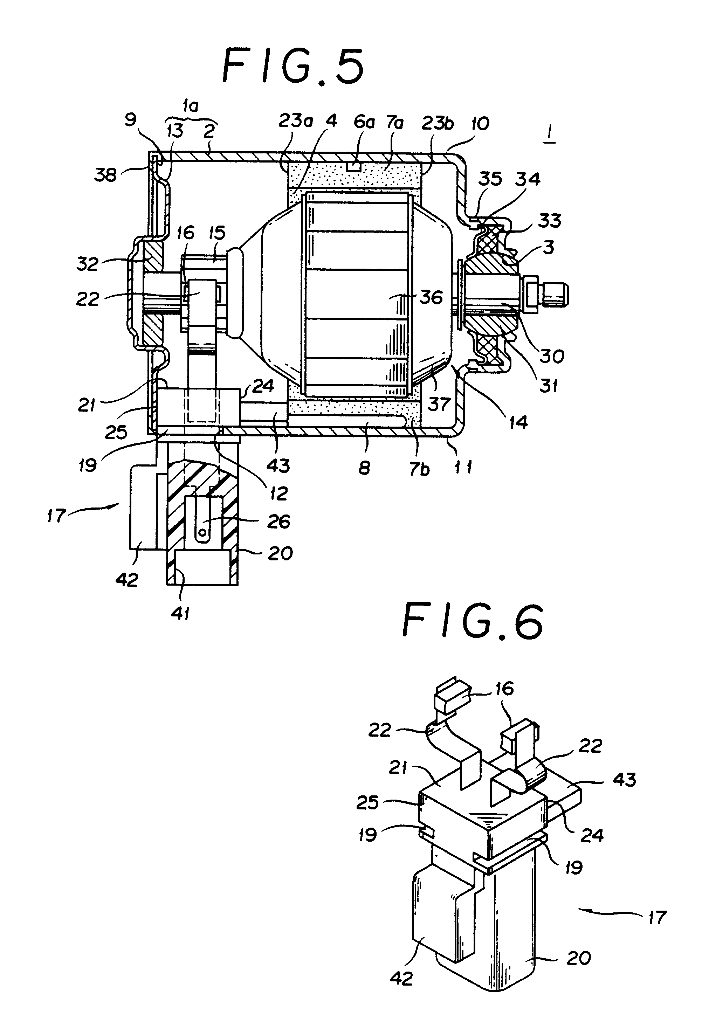

Figures 5 and 6 are a cross-section illustrating another embodiment of this invention and a perspective view of the coupler of this embodiment.

As illustrated, the coupler 17 of this embodiment has formed integrally with the coupler body 20 a retainer part 43 which extends from the front surface 24 toward the power side.

This retainer part 43 is formed in such a manner that it will abut with the end faces 23 of the two magnets 4 on the counter-power side when this coupler 17 is inserted in position in the coupler insertion hole 12.

The coupler 17 constructed as described above, similarly to the coupler of the former embodiment, can prevent the two magnets 4 from displacement toward the counter-power side and the magnet-fixing member 8 from dislocation toward the counter-power side.

In the two embodiments described above, the casing 2 has a flat face 11 formed thereon for the coupler 17 to facilitate a good seal at the time of attachment. This shape is not critical to the casing 2. This invention can be applied as effectively to a cylindrical casing as to the casing of the shape mentioned above.

The brushes 16 and the leaf springs 22 which are integrally formed with the coupler 17 are not restricted to the illustrated shapes but may be modified variously.

The centre hole 3 for permitting the insertion of the rotary shaft 30 is formed in the casing 2. This particular position is not critical. Optionally, it may be formed in the end bracket 13.

The present invention is not restricted to a motor whose commutator 15 is in the shape of a drum. Optionally, it may be applied to a so-called flat motor.

As described above, in the present invention, the coupler is attached to the casing in such a manner as to be nipped between the magnets and the end bracket. When the two part-circular magnets are fixed to the inner wall surface of the casing by the resilient force of the resilient retainer, therefore, the dislocation of the resilient retainer and the displacement of the magnets in the axial direction can be prevented and the magnets can be securely fixed. The efficiency of the work of final assembly of the motor is enhanced and the sealability of the motor improved because the coupler insertion hole is formed in a flat face and the coupler is attached to this coupler insertion hole by sliding it on. There is no need to contemplate the adoption of measures for preventing the resilient retainer from being dislocated in the direction of the leading end side because this resilient retainer is formed in the shape of the letter U. At the same time, it is inserted so that the open leg side thereof falls on the coupler side. This fact contributes to simplifying the manufacture of the component parts of the motor.

Further, the opposed leaf springs, to which the brushes are attached, are installed on the coupler. As a result, the work of making electric connection inside the motor can be omitted and improved efficiency of assembly is possible.

The present invention thus provides a magnet-retaining structure for a motor comprising a cylindrical blind casing having an opening formed at one end thereof, an end bracket attached to the opening and adapted to close the opening, two part-circular magnets inserted in the casing, an armature rotated across the magnetic lines of flux formed by the magnets, a brush for supplying electric current to the armature through the medium of a commutator, and a coupler for supplying external electric current to the brush, which magnet-retaining structure is characterised by the fact that a coupler insertion hole for permitting attachment of the coupler is formed in the casing by incising a passage down the opening of the casing, first stoppers colliding respectively with those of opposite end faces in the axial direction of each of the magnets which are on the side opposite to the opening and regulating the positions in the axial direction of the magnets on the side opposite to the opening and second stoppers colliding respectively with those of end faces of each of the magnets opposed to each other in the circumferential direction and regulating the positions in the circumferential direction of the magnets are formed on the inner wall surface of the casing, a resilient retainer formed by bending a resilient material in the shape of the letter U and adapted to urge the magnets with the resilient force tending to press the magnets outwardly in the radial direction is inserted between those of the end faces of each of the magnets opposed to each other in the circumferential direction, with the open leg side thereof disposed on the opening side, and the coupler is slid home in the coupler insertion hole from the opening side so as to be nipped between the neighbouring parts of the end faces of each of the magnets on the opening side which admit insertion of the resilient retainer and the inner wall surface of the end bracket.

Owing to this construction, the two magnets are fixed to the inner wall surface of the casing because the resilient force of the resilient retainer acts so as to press outwardly in the radial direction the two magnets having the positions thereof regulated in the circumferential direction by the second stoppers. The displacement of the two magnets in the axial direction is prevented because the coupler is attached to the coupler insertion hole in such a manner as to be nipped between the two magnets having the positions thereof regulated in the axial direction on the side opposite to the opening by the first stoppers and the inner wall surface of the end bracket. Further, the work of assembly during the attachment of the coupler is greatly facilitated because the coupler is attached as slid in to the coupler insertion hole. Even when the resilient retainer moves in the direction of the opening of the casing, the end part of the resilient retainer collides with the coupler and prevents the resilient retainer from a slip because the coupler collides with the neighbouring parts of the end faces on the opening side of each of the magnets which admit the resilient retainer and further because the resilient retainer formed in the shape of the letter U is inserted home with the open leg side thereof disposed on the coupler side. The resilient retainer is simple to manufacture and it is not required to be provided with any means for preventing the resilient retainer from being slipped in the direction opposite to the opening of the casing. Thus, nothing complicates the manufacture of the casing.

## Claims

1. An electric motor (1) comprising: a motor casing (2) having an open end (9) which is substantially covered by an end plate (13); a rotor shaft (30) rotatably mounted, at one end, in the plate and, at the other end, in the other end of the casing; a commutator (15) and an armature (36) mounted on the rotor shaft; brush gear (16) arranged to bear on the commutator; and two magnetic elements (4) of laterally arcuate section mounted in the casing adjacent the inner surface thereof, each element having an axial end face (23b) remote from the opening which abuts an axial stop (5a, 5b) formed on the casing;and a removable projection (17) constituting a mounting for the brush gear and an electrical coupler (17), the magnetic elements (4) being braced against the inner surface of the casing by means of a generally U-shaped resilient retaining member (8) having a base portion (8a) and a pair of legs (8b) extending from the base portion, the legs bearing against opposed first circumferential end faces (7b) of the magnetic elements (4), a second circumferential end face (7a) of each of the elements being urged toward respective circumferential stops (6a, 6b) on the inner surface of the casing, the ends (8c) of the legs of the retaining member remote from the base portion facing generally towards the open end of the casing; characterised in that the removable projection (17) is received in an aperture (12) in the casing, which aperture is also partially defined by the adjacent surface of the end plate, the projection facing the said ends of the legs of the retaining member and abutting the magnetic elements in the axial direction.

2. A motor as claimed in claim 1 in which the removable projection is slidably received in the aperture which aperture is closed by the end plate.

3. A motor as claimed in claim 1 or 2 in which the coupler abuts the axial end faces of the magnetic elements, facing the open end and to either side of the retaining member.

4. A motor as claimed in claim 1 or 2 in which the coupler is formed with a retaining projection (43) arranged to abut the axial end faces (23a) of the magnetic elements facing the open end and to either side of the retaining member.

5. A motor as claimed in claim 1, 2, 3 or 4 in which the brushes of the brush gear are mounted on leaf springs (22) attached to the coupler.

6. A motor as claimed in any preceding claim in which the aperture is formed in a flat portion of the casing.

7. A motor as claimed in any preceding claim in which each first circumferential end face defines a recess with the adjacent surface of the casing, at least in the region where the legs are braced against the first circumferential end faces, to prevent the retaining member from being dislocated radially inwardly.

8. A motor as claimed in any preceding claim in which the commutator is cylindrical.

## Patentansprüche

1. Elektromotor (1) mit:
einem Motorgehäuse (2) mit einem offenen Ende (9), das im wesentlichen durch eine Endplatte (13) verschlossen ist; mit einer Rotorwelle (30), die an einem Ende in der Endplatte und am anderen Ende im anderen Ende des Gehäuses drehbar gelagert ist; mit einem Kollektor (15) und einem auf der Rotorwelle angeordneten Rotor (36); mit einem Bürstenstromabnehmer (16), der so angeordnet ist, daß er auf dem Kollektor aufliegt; und mit zwei magnetischen Elementen (4) mit seitlich gebogenem Querschnitt, die in dem Gehäuse an die innere Oberfläche angrenzend montiert sind, wobei jedes Element eine axiale Endfläche (23b) aufweist, die entfernt von der Öffnung angeordnet ist und an einem axialen, an dem Gehäuse ausgebildeten Anschlag (5a, 5b) anliegt; und mit einem entfernbaren Vorsprung (17), der eine Lagerung für den Bürstenstromabnehmer und eine elektrische Kupplung (17) bildet, wobei die magnetischen Elemente (4) gegen die innere Oberfläche des Gehäuses mittels eines im wesentlichen U-förmigen, federnden Rückhalteelements (8) gedrückt werden, das einen Basisbereich (8a) und ein Paar sich von dem Basisbereich wegerstreckende Schenkel (8b) aufweist, wobei die Schenkel gegen die einander gegenüberliegenden ersten Umfangsendflächen (7b) der magnetischen Elemente (4) drücken und eine zweite Umfangsendfläche (7a) eines jeden der Elemente gegen entsprechende Umfangsanschläge (6a, 6b) an der inneren Oberfläche des Gehäuses gedrückt werden, wobei die Enden (8c) der Schenkel des Rückhalteelements, die dem Basisbereich abgewandt sind, generell dem offenen Ende des Gehäuses zugewandt sind;
dadurch gekennzeichnet, daß der entfernbare Vorsprung (17) in eine Öffnung (12) im Gehäuse eingefügt ist, wobei die Öffnung teilweise auch durch die angrenzende Oberfläche der Endplatte definiert ist, und daß der Vorsprung den Enden der Schenkel des Rückhalteelements zugewandt ist und in axialer Richtung an den magnetischen Elementen anliegt.

2. Motor nach Anspruch 1, bei dem der entfernbare Vorsprung verschiebbar in der Öffnung aufgenommen ist, wobei die Öffnung durch die Endplatte verschlossen wird.

3. Motor nach einem der Ansprüche 1 oder 2, bei dem die Kupplung an den dem offenen Ende gegenüberliegenden, axialen Endflächen der magnetischen Elemente, die sich zu beiden Seiten des Rückhalteelements erstrecken, anliegt.

4. Motor nach einem der Ansprüche 1 oder 2, bei dem die Kupplung einen Rückhaltevorsprung (43) aufweist, der an den dem offenen Ende gegenüberliegenden, axialen Endflächen (23a) der magnetischen Elemente anliegt, die sich zu beiden Seiten des Rückhalteelements erstrecken.

5. Motor nach einem der Ansprüche 1, 2, 3 oder 4, bei dem die Bürsten des Bürstenstromabnehmers auf mit der Kupplung verbundenen Blattfedern (22) montiert sind.

6. Motor nach einem der vorhergehenden Ansprüche, bei dem die Öffnung in einem flachen Bereich des Gehäuses ausgebildet ist.

7. Motor nach einem der vorhergehenden Ansprüche, bei dem jede erste Umfangsendfläche mit der angrenzenden Oberfläche des Gehäuses eine Ausnehmung definiert, zumindest in dem Bereich, in dem die Schenkel gegen die ersten Umfangsendflächen gedrückt werden, um zu verhindern, daß das Rückhalteelement radial nach innen versetzt wird.

8. Motor nach einem der vorhergehenden Ansprüche, bei dem der Kollektor zylindrisch ist.

## Revendications

1. Moteur électrique (1) comprenant : un carter de moteur (2) avec une extrémité ouverte (9) qui est sensiblement revêtue d'une plaque d'extrémité (13) ; un arbre rotorique (30) monté de façon rotative sur une extrémité, dans la plaque et, de l'autre côté, dans l'autre extrémité du carter; un commutateur (15) et un induit (36) montés sur l'arbre rotorique ; un balai conducteur (16) apte à s'appuyer sur le commutateur ; et deux éléments magnétiques (4) de section latéralement arquée, montés dans le carter de façon contiguë à sa surface interne, chaque élément ayant une face d'extrémité axiale (23b) éloignée de l'ouverture qui repose sur une butée axiale (5a, 5b) formée sur le carter ; et une saillie mobile (17) constituant un support pour le balai conducteur et un coupleur électrique (17), les éléments magnétiques (4) étant assujettis contre la surface interne du carter (4) au moyen d'un élément de retenue (8) élastique de façon générale en forme de U comportant une portion de base (8a) et une paire de jambes (8b) s'étendant à partir de la portion de base, les jambes s'appuyant contre des premières faces d'extrémité circonférentielle opposées (7b) des éléments magnétiques (4) ; une seconde face d'extrémité circonférentielle (7a) de chacun des éléments étant sollicitée en direction de butées circonférentielles respectives (6a, 6b) sur la surface interne du carter, les extrémités (8c) des jambes de l'élément de retenue éloigné de la portion de base faisant face de façon générale en direction de l'extrémité ouverte du carter ; caractérisé en ce que la saillie amovible (17) est logée dans une ouverture (12) du carter, laquelle ouverture est également partiellement définie par la surface contiguë de la plaque d'extrémité, la saillie faisant face aux extrémités des jambes de l'élément de retenue et aboutant ou reposant sur les éléments magnétiques dans la direction axiale.

2. Moteur selon la revendication 1 dans lequel la saillie amovible est logée de façon coulissante dans l'ouverture, laquelle ouverture est obturée par la plaque d'extrémité.

3. Moteur selon la revendication 1 ou 2, dans lequel le coupleur vient en butée contre les faces d'extrémité axiale des éléments magnétiques, faisant face à l'extrémité ouverte et sur l'un ou l'autre des côtés de l'élément de retenue.

4. Moteur selon la revendication 1 ou 2, dans lequel le coupleur est formé avec une saillie de retenue (43) apte à venir en butée contre les phases d'extrémité axiale (23a) des éléments magnétiques faisant face à l'extrémité ouverte et sur l'un ou l'autre côté de l'élément de retenue.

5. Moteur selon la revendication 1, 2, 3 ou 4, dans lequel les balais du mécanisme à balai conducteur sont montés sur des ressorts à lames (22) fixés sur le coupleur.

6. Moteur selon l'une quelconque des revendications précédentes, dans lequel l'ouverture est ménagée dans une portion plate du carter.

7. Moteur selon l'une quelconque des revendications précédentes, dans lequel chaque première face d'extrémité circonférentielle définit un évidement avec la surface contiguë du carter, au moins dans la zone où les jambes sont assujetties contre les premières faces d'extrémité circonférentielle pour empêcher le déplacement radialement vers l'intérieur de l'élément de retenue.

8. Moteur selon l'une quelconque des revendications précédentes, dans lequel le commutateur est cylindrique.
